# EUROPEAN PATENT APPLICATION

(11) **EP 1 840 816 A2**
(43) Date of publication of application: **03.10.2007**
(21) Application number: 07006338.3
(22) Date of filing: 28.03.2007
(51) Int. Cl.: G06Q 90/00

(54) **Information setting system, terminal apparatus, server apparatus, electronic apparatus, information setting method, program for terminal apparatus, program for server apparatus, and program for electronic apparatus**

(30) Priority: 31.03.2006 JP 2006099360
(71) Applicant: Pioneer Corporation, Meguro-ku, Tokyo (JP)
(72) Inventor: Ishikawa, Yoshiharu, Tokyo (JP)
(74) Representative: von den Steinen, Axel

(57) **Abstract**

An order number fixed at the time of purchasing a television set and supplementary information indicating a position to be set with the television set TV installed are sent to a server apparatus SV. The server apparatus SV generates regional information including channel information based on the information and send to the television set TV installed in the installation place. The television set TV receiving them automatically executes initial setting such as channel setting using the received regional information and proceeds to the state enabling to start watching.

## Description

### BACKGROUND OF THE INVENTION

### Field of the Invention

The present invention relates to a technical field of an information setting system and others, more particularly, an information setting system for setting information necessary for an electronic apparatus including television sets, for example, which are sold in the market and installed in the location of users.

### Related Art

When users purchases a television set and starts to use it, a manual operation is required to assign broadcasting frequency of a region of user's residence to each channel of thus purchased television set one by one.

However, with recent development of aging society and increase of sophisticated function of the television set itself, it has become practically difficult for the user to use all of the information to be set in operating the television set.

In order to deal with this circumference, Patent Reference 1 mentioned below is typically developed as one type of a television set to facilitate simplification of initial setting to deal with this problem.

In this patent Reference 1, more particularly, when an input operation to input position information of a purchaser is performed, this position information is registered with so-called a home server. When the television set is connected to the home server, specific region channel information addressed to specific region corresponding to the registered position information is acquired from outside, and the acquired channel information is output to the above-mentioned television set. Thereby, the television set performs necessary channel setting based on the output channel information.
Patent Document 1: Japanese Unexamined Patent Publication No. 2005-346633.

However, in the above-mentioned Patent Reference 1, the purchaser oneself has to carry out the operation to register the position information with the home server after all. In view of the recent social trend mentioned above, the problems have not been solved at all.

Therefore, the present invention is made in view of the above-mentioned problem. An object of an illustrative, non-limiting embodiment of the present invention is to provide an information setting system capable of executing information setting necessary for the electronic apparatus without troubling purchasers of electronic apparatus such as a television set.

### SUMMARY OF THE INVENTION

According to a first aspect of an illustrative, non-limiting embodiment of the present invention, there is provided an information setting system for setting regional information corresponding to a region including an operation position of an electronic apparatus with respect to the electronic apparatus in operating the electronic apparatus including: the electronic apparatus; a server apparatus; and a terminal apparatus installed in a store selling the electronic apparatus, these apparatus being connected through a network, wherein
the terminal apparatus includes: an input device which inputs for identifying electronic apparatus identification information for the electronic apparatus and position identification information for identifying the operation position; and a terminal output device which generates apparatus/position specification information corresponding respectively to the input position identification information and the input electronic apparatus identification information and outputs to the server apparatus through the network,
the server apparatus includes a specifying device such as processing section which specifies the regional information to be set in the electronic apparatus corresponding to the apparatus/position specification information based on the apparatus/position information sent from the terminal apparatus; and a server sending device which sends the specified regional information to the electronic apparatus in the operation position through the network, and
the electronic apparatus comprises a setting device such as an image processing device which sets the regional information sent from the server apparatus in the electronic apparatus itself.

According to a second aspect of an illustrative, non-limiting embodiment of the present invention, there is provided an information setting system for setting regional information corresponding to a region including an operation position of an electronic apparatus in the electronic apparatus in operating the electronic apparatus including: the electronic apparatus; a server apparatus; and a terminal apparatus installed in a store selling the electronic apparatus; these apparatus connected through a network, wherein
the terminal apparatus includes:
an input device which inputs for identifying electronic apparatus identification information for the electronic apparatus and position identification information for identifying the operation position; and a terminal output device such as an interface which generates apparatus/position specification information corresponding respectively to the input position identification information and the input electronic apparatus identification information and outputs to the server apparatus through the network,
the server apparatus includes a storing device which temporarily stores apparatus/position specification information sent from the terminal apparatus; and a server sending device such as an interface which sends the specified regional information to the electronic apparatus in the operation position through the network, and
the electronic apparatus comprises a specifying device which specifies the regional information to be set in the electronic apparatus corresponding to the apparatus/position specification information based on the apparatus/position information sent from the terminal apparatus; and a setting device which sets the regional information sent from the server apparatus in the electronic apparatus itself.

According to a sixth aspect of an illustrative, non-limiting embodiment of the present invention, there is provided the information setting system according to the precedent aspects, wherein the terminal apparatus includes the input device and the terminal sending device.

According to a seventh aspect of an illustrative, non-limiting embodiment of the present invention, there is provided the information setting system according to the first aspect, wherein the server apparatus includes the specifying device and the server sending device.

According to an eighth aspect of an illustrative, non-limiting embodiment of the present invention, there is provided the information setting system according to the second aspect, wherein the server apparatus includes the storing device and the server sending device.

According to a ninth aspect of an illustrative, non-limiting embodiment of the present invention, there is provided the information setting system according to the first aspect, wherein the electronic apparatus includes the setting device.

According to a tenth aspect of an illustrative, non-limiting embodiment of the present invention, there is provided the information setting system according to the second aspect, wherein the information setting system according to claim 2, wherein the electronic apparatus includes the specifying device and the setting device.

According to an eleventh aspect of an illustrative, non-limiting embodiment of the present invention, there is provided an information setting method executed by an information setting system for setting regional information corresponding to a region including an operation position of an electronic apparatus with respect to the electronic apparatus in operating the electronic apparatus, including: the electronic apparatus; a server apparatus; and a terminal apparatus installed in a store selling the electronic apparatus, these apparatus being connected through a network, wherein
the information setting method includes steps of:
inputting respectively electronic apparatus identification information for identifying the electronic device and position identification information for identifying the operation position in the terminal device;
generating apparatus/position specification information respectively corresponding to the input position identification information and the input electronic apparatus information;
   specifying the regional information to be set to the electronic apparatus corresponding to the apparatus/position specification information based on the generated apparatus/position specification information;
setting the specified regional information to the electronic apparatus in the operation position.

According to a twelfth aspect of an illustrative, non-limiting embodiment of the present invention, there is provided the information setting system according to the precedent aspects, wherein a computer functions as the terminal device included in the information setting system.

According to a thirteenth aspect of an illustrative, non-limiting embodiment of the present invention, there is provided the information setting system according to the precedent aspects, wherein a computer functions as the server apparatus included in the information setting system.

According to a fourteenth aspect of an illustrative, non-limiting embodiment of the present invention, there is provided the information setting system according to the precedent aspects, a computer functions as the electronic apparatus included in the information setting system.

### BRIEF DESCRIPTION OF THE DRAWINGS

Figure 1 is a block diagram showing a general configuration of information setting system related to embodiments.
Figure 2A and 2B are flowcharts showing action of the information setting system related to the embodiments.

### DESCRIPTION OF THE PREFERRED EMBODIMENTS

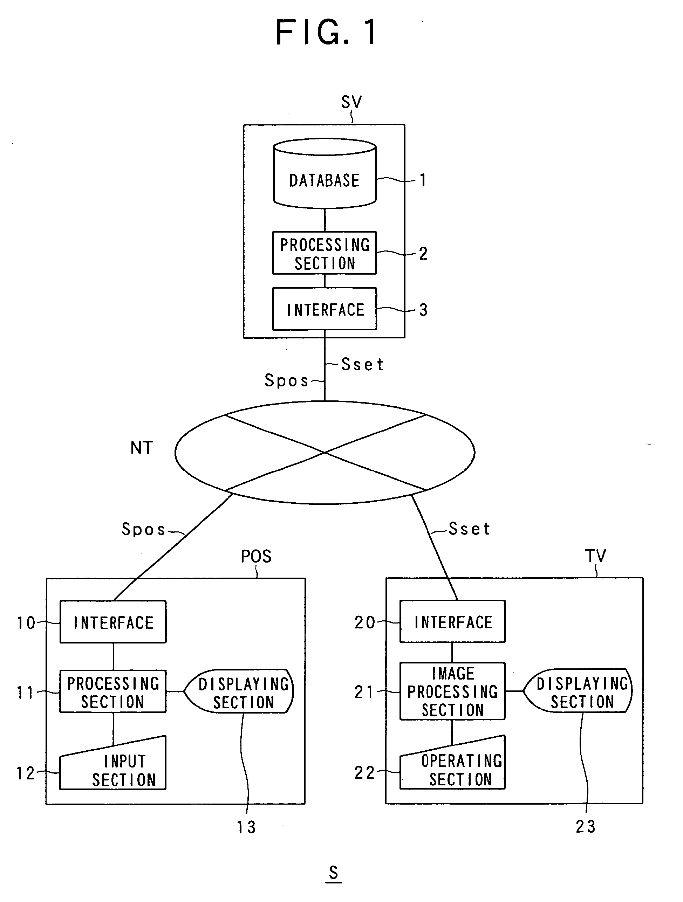

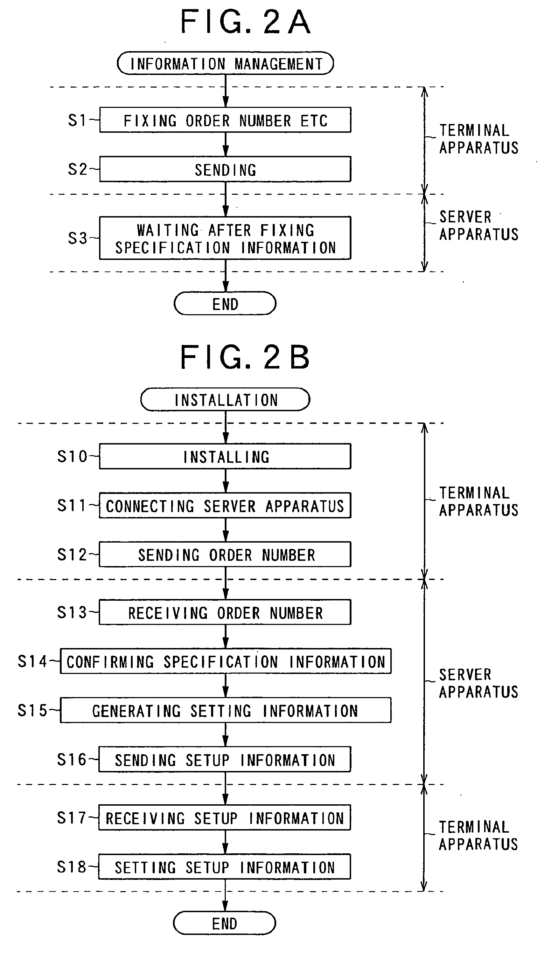

Preferred embodiments of the present invention will be described in conjunction with FIGs. 1 and 2. In the embodiments described hereinafter, the present invention is applied to an information setting system for setting channels required for starting watching with the television which is delivered to the purchaser home.

Hereinafter, each designation of numerical references in the drawings typically is as follows: 1:Database; 2, 11:Processing Section; 3, 10, 20:Interface; 21:Image Processing Section; S:Information Setting System; SV:Server Apparatus ; POS:Terminal Apparatus; TV:Television Set; and NT:Network.

FIG. 1 is a block diagram showing general configuration of the above-mentioned information setting system related to the embodiment. FIG. 2 is a flow chart showing process executed in the above-mentioned information setting system.

As shown in FIG. 1, the information setting system related to the embodiment includes a television set TV, a server apparatus SV, a terminal apparatus POS installed in a store selling the above-mentioned television set TV.

And the server apparatus SV includes a database 1 as a storing device, processing section 2 as a specifying device and connection information sending device, and an interface 3 as a server sending device.

Further, the terminal apparatus POS includes an interface 10 as a terminal sending device, a processing section 11, an input section 13 as an input device and a displaying section 13.

Furthermore, the television set TV includes an interface 20, an image processing section 21 as a setting device, an operating section 22, and a display section 23.

In the above configuration, the interfaces 3, 10 and 20 are capable of interactively sending and receiving data through a network NT such as internet.

Next, an operation of the information setting system S related to the embodiment will be described.

First, a purchaser purchasing the television set TV related to the embodiment visits a store installing a terminal apparatus POS inputs with the input section 12 a purchaser name, a postal code and address (including names of prefecture and city/town expressing a position of television installation (generally, a house or office of the purchaser), together with a procedure of purchasing the television set TV while confirming displays on the displaying section 13.

Thus the processing section 11 of the terminal apparatus POS associates the input postal code and others with model name and production number specifying the purchased television set TV itself, and generates specification information in the sate of order number put (Step S1). This generated specification information Spos is sent to the server apparatus SV through the interface 10 and the network NT (Step S2).

And the processing section 2 in the server apparatus SV associates the order number with the region name (e.g. for the analog broadcasting) or the postal code and prefecture name (e.g. for the terrestrial digital broadcasting) which are required for initiation of the television set TV based on the received specification information Spos, confirms, stores in the database 1 as specification information, and waits (Step S3).

Then, when the purchased television set TV is purchased, delivered to the purchaser, and installed (step S10), the installed television set TV is connected to the server apparatus SV through the interface 20 (Step S11), the order number of the purchased television set TV (step S12).

Next, the order number is received by the server apparatus SV through the interface 3 (Step S13), the processing section 2 of the server apparatus SV retrieves the received order number from a database 1 as a retrieval key, and the above-mentioned stored specification information (ref. to Step 3) is taken out from the database 1 (Step 14).

Then receivable television broadcast frequency and corresponding channel number and others are retrieved as well in the database 1 from the address of the purchaser indicated by the specification information based on the taken out specification information, and the retrieval result and the specification information Sset including the order number are generated (Step S15) and sent to the television set TV through the network NT (Step S16).

Then the image processing section 21 inside the television set TV having received the specification information Sset through the interface 20 executes initial setting (channel setting and others) using the information including frequency and channel number and others of the television broadcast which is included in the specification information Sset, and waits as in the possible state of start (Step S18).

As described above, according to an operation of the information system S, channel information and others corresponding to television set TV are specified with specification information Spos corresponding to postal codes and others input in the terminal apparatus POS as a clue, and the specified channel information and others are sent to the television set itself from the server apparatus to be set. Therefore the purchaser of the television set can operate the television set TV without any trouble to input the necessary channel information and others to the television set.

Since the order number and model name, and either one of postal code and address are used as specification information Spos, setting the television set can be automated using the information used in ordinary sales service.

In the above-mentioned embodiment, specification information is configured to use the model name and others of the purchased television set and the postal code and others indicating the installation position. Besides, for example, if models of recording devices or other tuners connected to the television set or models of antenna and others are previously known, these may be included as supplementary information in the specification information Spos.

In this case, setting information Sset necessary for connecting the above-mentioned device and others to the television set based on the contents of the supplementary information are included in the above-mentioned setting information and sent from the server apparatus SV to the television set TV having been installed, thereby even setting processes necessary for connection of the recording device and others may be automated when connecting the recording device and others.

Further, in the configuration of the above-mentioned embodiment, the setting information Spos and others are generated with the order number specified on purchase of the television set TV as a clue. Besides, if the purchased television set TV itself can be associated with the postal code, address and others indicating the preset area of operation, the setting information Spos and others may be generated with invoice number, bill number and others except for the order number as a clue.

On the other hand, when the purchaser changes address after purchasing the television set TV or an environment of this television set TV changes, the information of new address is associated with the order number and sent to the server apparatus SV, and setting information Spos corresponding to the new address may be newly generated and sent to that television set TV to be subjected to initial setting and others.

Further, in the above-mentioned embodiment, the terminal apparatus POS is installed in the store selling the television set TV. The configuration is not limited to this. For example, the present invention is applicable to a mail-order method (including corresponding methods by postal mail, telephone and internet access in which the purchase procedures are carried out through a personal computer installed in an operation site such as residence when purchasing a television set TV, because this personal computer functions as the above-mentioned terminal apparatus POS.

Further, portions for each apparatus in a program corresponding to the flowchart shown in FIG. 2 is recorded in information recording means such as a flexible disk or a hard disk, or they are acquired through internet and others and recorded respectively, and these are read with a general computer and executed, and this computer may be utilized as the processing section 2, 11 related to each embodiment.

The present invention is not confined to the configurations listed in the foregoing embodiments, but it is easily understood that the person skilled in the art can modify such configurations into various other modes, within the scope of the present invention described in the claims.

## Claims

1. An information setting system for setting regional information corresponding to a region including an operation position of an electronic apparatus with respect to the electronic apparatus in operating the electronic apparatus comprising: the electronic apparatus; a server apparatus; and a terminal apparatus installed in a store selling the electronic apparatus, the apparatuses being mutually connected through a network, wherein
the terminal apparatus comprises:
an input device which inputs for identifying electronic apparatus identification information for the electronic apparatus and position identification information for identifying the operation position; and a terminal output device which generates apparatus/position specification information corresponding respectively to the input position identification information and the input electronic apparatus identification information and outputs to the server apparatus through the network,
the server apparatus comprises a specifying device which specifies the regional information to be set in the electronic apparatus corresponding to the apparatus/position specification information based on the apparatus/position information sent from the terminal apparatus; and a server sending device which sends the specified regional information to the electronic apparatus in the operation position through the network, and
the electronic apparatus comprises a setting device which sets the regional information sent from the server apparatus in the electronic apparatus itself.

2. An information setting system for setting regional information corresponding to a region including an operation position of an electronic apparatus in the electronic apparatus in operating the electronic apparatus comprising:
the electronic apparatus;
a server apparatus; and
a terminal apparatus installed in a store selling the electronic apparatus, the apparatuses being mutually connected through a network, wherein
the terminal apparatus comprises:
an input device which inputs for identifying electronic apparatus identification information for the electronic apparatus and position identification information for identifying the operation position; and a terminal output device which generates apparatus/position specification information corresponding respectively to the input position identification information and the input electronic apparatus identification information and outputs to the server apparatus through the network,
the server apparatus comprises a storing device which temporarily stores apparatus/position specification information sent from the terminal apparatus; and a server sending device which sends the specified regional information to the electronic apparatus in the operation position through the network, and
the electronic apparatus comprises a specifying device which specifies the regional information to be set in the electronic apparatus corresponding to the apparatus/position specification information based on the apparatus/position information sent from the terminal apparatus, and a setting device which sets the regional information sent from the server apparatus in the electronic apparatus itself.

3. The information setting system according to claim 1 or claim 2, wherein
the apparatus/position specification information includes at least either one of a postal code and an address indicating the operation position, the electronic apparatus identification information, and an order number of the electronic apparatus itself.

4. The information setting system according to any one of claims 1 to 3, wherein
the input device in the terminal apparatus is connected to the electronic apparatus in the operation position and further used for inputting supplementary information including at least peripheral device identification information for identifying peripheral devices, the terminal sending device in the terminal apparatus sends the supplementary information to the server apparatus together with the apparatus/position specification information, the server apparatus further comprises
a connection information sending device which specifies connection information necessary for connecting the peripheral device to the electronic apparatus based on the supplementary information thus sent and sends to the electronic apparatus in the operation position through the network, and the setting device in the electronic device executes setting necessary for connection with the peripheral device to the electronic apparatus based on the connection information thus sent.

5. The information setting system according to any one of claims 1 to 4, wherein
the electronic apparatus is a television set operated in the operation position.

6. The information setting system according to any one of claims 1 to 5, wherein
the terminal apparatus comprises the input device and the terminal sending device.

7. The information setting system according to claim 1, wherein
the server apparatus comprises the specifying device and the server sending device.

8. The information setting system according to claim 2, wherein
the server apparatus comprises the storing device and the server sending device.

9. The information setting system according to claim 1, wherein
the electronic apparatus comprises the setting device.

10. The information setting system according to claim 2, wherein
the electronic apparatus comprises the specifying device and the setting device.

11. An information setting method executed by an information setting system for setting regional information corresponding to a region including an operation position of an electronic apparatus with respect to the electronic apparatus in operating the electronic apparatus, comprising:
the electronic apparatus; a server apparatus; and a terminal apparatus installed in a store selling the electronic apparatus, these apparatus being connected through a network, wherein
the information setting method comprising steps of:
respectively inputting electronic apparatus identification information for identifying the electronic device and position identification information for identifying the operation position in the terminal device;
generating apparatus/position specification information respectively corresponding to the input position identification information and the input electronic apparatus information;
specifying the regional information to be set to the electronic apparatus corresponding to the apparatus/position specification information based on the apparatus/position specification information thus generated; and
setting the specified regional information to the electronic apparatus in the operation position.

12. The terminal apparatus program according to any one of claims 1 to 5, wherein
a computer functions as the terminal device included in the information setting system.

13. The server apparatus program according to any one of claims 1 to 5, wherein
a computer functions as the server apparatus included in the information setting system.

14. The electronic apparatus program according to any one of claims 1 to 5, wherein
a computer functions as the electronic apparatus included in the information setting system.
